Europäisches Patentamt

European Patent Office

Office européen des brevets

(11) Veröffentlichungsnummer: **0 396 917**

**A2**

## (12) EUROPÄISCHE PATENTANMELDUNG

(21) Anmeldenummer: **90106719.9**

(22) Anmeldetag: **07.04.90**

(51) Int. Cl.5: **B32B 27/20**

(30) Priorität: **10.05.89 DE 3915255**

(43) Veröffentlichungstag der Anmeldung:
**14.11.90 Patentblatt 90/46**

(84) Benannte Vertragsstaaten:
**AT BE CH DE DK ES FR GB GR IT LI LU NL SE**

(71) Anmelder: **J. H. Benecke AG**
**Beneckeallee 40**
**D-3000 Hannover 1(DE)**

(72) Erfinder: **Wagner, Werner, Dr.**
**Harrenhorst 25**
**D-3052 Bad Nenndorf(DE)**
Erfinder: **Bruder, Axel, Dr.**
**Im Wiesengrund 10 A**
**D-3006 Burgwedel 3(DE)**
Erfinder: **Giehsler, Kurt**
**Alt Vinnhorst 20**
**D-3000 Hannover 21(DE)**

(74) Vertreter: **Thömen, Uwe, Dipl.-Ing.**
**Patentanwalt U. Thömen Zeppelinstrasse 5**
**D-3000 Hannover 1(DE)**

(54) **Tiefziehbare mehrschichtige Folienanordnung.**

(57) Bei Armaturenbrettern, die durch eine mehrschichtige mit PUR-Schaum hinterschäumte Folienanordnung gebildet sind, besteht die Gefahr, daß die Folien bei starker Wärmeeinwirkung aufreißen, weil sich die PUR-Schaumschicht bei hohen Temperaturen zersetzt und die dabei entstehenden Zersetzungsprodukte in die Folie eingehen und dort die Zersetzung der Folie katalysieren.

Um diesen Nachteil zu vermeiden, ist die Folienanordnung in neuartiger Weise so ausgebildet, daß zumindest eine Folienschicht lichtreflektierendes Material bzw. Pulver oder Pigmente enthält, durch welche die Erwärmung der Folie infolge von Strahlungswärme reduziert wird.

FIG.1

## Tiefziehbare mehrschichtige Folienanordnung

Die Erfindung betrifft eine tiefziehbare mehrschichtige Folienanordnung gemäß dem Oberbegriff des Patentanspruchs 1.

Solche tiefziehbare mehrschichtige Folienanordnungen finden beispielsweise einen großen Anwendungsbereich bei Innenauskleidungen von Kraftfahrzeugen. Dabei werden die nach einer gewünschten Form tiefgezogenen Folien vorzugsweise mit PUR-Schaum hinterschäumt, wodurch ein gewünschter Formkörper, beispielsweise ein Armaturenbrett für ein Kraftfahrzeug, gebildet wird.

Grundsätzlich haben sich solche Armaturenbretter oder dergleichen in der Praxis vielfach bewährt, allerdings besteht immer noch ein Problem, welches darauf zurückzuführen ist, daß die Armaturenbretter häufig einer sehr großen Erwärmung infolge von Strahlungswärme ausgesetzt sind, wenn das Kraftfahrzeug längere Zeit in der Sonne steht. Erschwerend kommt noch dazu, daß die Armaturenbretter von den Automobilherstellern überwiegend in schwarzer Farbe gewählt werden.

Die schwarzen Farbpartikel absorbieren die Strahlungswärme aber sozusagen mit optimalem Wirkungsgrad und geben die entstandene Wärme an und durch die Folienschicht hindurch an die Schaumschicht weiter.

In der Praxis hat sich nun gezeigt, daß die von der Folie an die Schaumschicht abgegebene Wärme solche hohen Temperaturwerte von größer als 115° C erreichen kann, daß die Schaumschicht sich zumindest an ihrer der Folie unmittelbar benachbarten Seite zersetzt. Die dabei entstehenden Zersetzungsstoffe bzw. Abbauprodukte gelangen in die Folie und katalysieren ihrerseits eine Zersetzung der Folie.

Auch als Folge dieser Zersetzung der Folie bilden sich Risse und schließlich kann die Folie sogar aufreißen (vergleichbar der Oberfläche eines völlig ausgetrockneten Flußbettes).

Der Erfindung liegt die Aufgabe zugrunde, eine tiefziehbare mehrschichtige Folienanordnung gemäß dem Oberbegriff des Patentanspruchs 1 zu schaffen, bei welcher trotz unvermeidbarer Erwärmung durch Sonneneinstrahlung eine Zersetzung des PUR-Schaumes und so auch die Bildung von Rissen deutlich vermindert ist.

Dieses Ziel erreicht die Erfindung bei der vorausgesetzten tiefziehbaren mehrschichtigen Folienanordnung dadurch, daß zumindest eine Folienschicht pulverförmige Pigmente aus einem lichtreflektierenden Material enthält, die bei der Herstellung der Folie zugegeben sind und ohne wesentlichen Einfluß auf die Farbe der Oberfolie sind.

Die Erfindung geht von der Erkenntnis aus, daß nicht die Folie selbst, sondern die PUR-Schaumschicht die Schwachstelle bei der Erwärmung und der damit verbundenen Nachteile ist. Die Schaumschicht ist nämlich aufgrund der von ihr erzeugten Zersetzungs produkte in hohem Maße dafür mit verantwortlich, wenn die Folie aufreißt.

Der Erfindung liegt deshalb der wesentliche Gedanke zugrunde, die Schaumschicht selbst zwar unverändert zu belassen, jedoch die Temperatur an der Grenzschicht zwischen der Unterfolie unter der Schaumschicht zumindest soweit zu reduzieren, daß die Zersetzung der Schaumschicht drastisch reduziert wird. Damit ist auch weitgehend verhindert, daß die Folie durch Bildung von Rissen zerstört wird.

Durch die Beigabe von beispielsweise Aluminiumpulver in einer Folienschicht entsteht eine in ihrem Aufbau völlig neue Folie. Dabei hat sich gezeigt, daß durch die einzelnen pulverförmigen Teilchen bzw. Pigmente des lichtreflektierenden Materials die Erwärmung der Folie durch Strahlungswärme bedeutend reduziert werden kann, mit der Folge, daß sich die Folie nicht mehr so stark erwärmt. Somit wird auch weniger Wärme von der Folie an die Schaumschicht abgegeben, und an der Grenzschicht zwischen der Folie und der Schaumschicht lassen sich soweit erniedrigte Temperaturen einhalten, daß die Zersetzungstendenz der Schaumschicht deutlich reduziert wird.

In Versuchen konnte nachgewiesen werden, daß es bei der Erfindung möglich ist, die Temperatur an der Grenzschicht um etwa 30° C zu erniedrigen. Zwar erscheint dieser Wert von 30° C nicht sehr groß, jedoch muß man hier berücksichtigen, daß man sich hier in einem Grenzbereich bewegt. Dabei genügen die erwähnten 30° C schon, weil damit die kritische Zerstörungstemperatur, bei welcher eine Zersetzung der Schaumschicht einsetzt, eindeutig unterschritten ist.

Es ist zwar an sich bekannt, daß durch die Verwendung von Aluminiumfolie-Reflektoren Sonnenlicht zurückgehalten werden kann, weil die Lichtstrahlen durch das Aluminium reflektiert werden. Man hat deshalb auch schon bei Rollos von Hausfenstern die nach außen weisende Oberfläche mit Aluminium versehen, wobei weniger die mögliche Wärmeentwicklung als vielmehr die Abweisung von Sonnenlicht im Vordergrund steht. Dabei ist es von Nachteil, daß die Oberfläche der Rollos dann zwangsläufig die Aluminiumfarbe annimmt.

Bei der Erfindung wird demgegenüber gleichwohl min destens einer Folienschicht lichtreflektierendes Pulver bei der Herstellung der Folie beigegeben, wobei sich das Pulver nicht auf der Oberfläche befindet, sondern innerhalb der Folie selbst, so daß die gewünschte weitgehend schwarze Farbe für

ein Armaturenbrett beibehalten werden kann.

In zweckmäßiger Ausgestaltung der Erfindung befindet sich auf der Oberfolie noch eine gesonderte pigmentierte Lackschicht oder Folie, um einen einwandfreien Farbeindruck hervorzurufen.

Gemäß einer weiteren vorteilhaften Ausgestaltung der Erfindung ist vorgesehen, daß auch die Unterfolie lichtreflektierendes Pulver enthält, und zwar in zweckmäßiger Weise in größerem Anteil als die Oberfolie.

Entscheidend für die Funktion der Reflektion des lichtreflektierenden Pulvers im Sinne einer Reduzierung der Erwärmung der Folienanordnung infolge von Strahlungswärme ist es, daß das Pulver sehr dicht an die Oberfläche gebracht wird, wobei sich die Einsatzmenge für das lichtreflektierende Pulver nach den möglichen zulässigen Farbveränderungen richtet und im allgemeinen geringer als beim Unterbau der Folie ist.

Die Teilchengröße des lichtreflektierenden Pulvers kann vorzugsweise zwischen 3 und 100 $\mu$m liegen.

Weitere zweckmäßige Ausgestaltungen der Erfindung ergeben sich aus den Unteransprüchen, der Beschreibung und der Zeichnung.

Nachfolgend wird die Erfindung zum besseren Verständnis anhand der in der Zeichnung dargestellten Ausführungsbeispiele näher erläutert. Es zeigen:

Fig. 1 eine schematische Querschnittsansicht einer hinterschäumten Folienanordnung,

Fig. 2 ein anderes Ausführungsbeispiel einer Folienanordnung,

Fig. 3 ein Diagramm zur Verdeutlichung des Temperaturver laufs an der Oberfläche der Folienanordnung und an der Grenzschicht zwischen der Folienanordnung und der Schaumsicht, und zwar beim Stand der Technik, und

Fig. 4 ein schematisches Diagramm entsprechend Fig. 3, jedoch bei einer Folienanordnung gemäß der Erfindung.

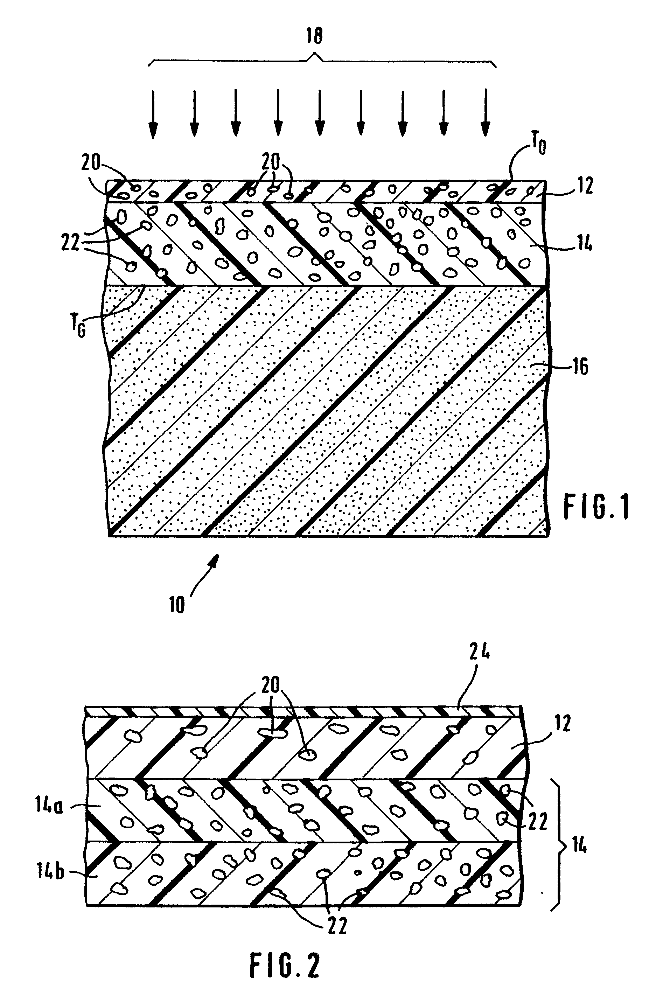

In Fig. 1 ist in schematischer Teil-Querschnittsansicht ein als Ganzes mit der Bezugsziffer 10 bezeichnetes Armaturenbrett als Innenverkleidung für ein Kraftfahrzeug dargestellt. Das Armaturenbrett 10 besteht aus einer Folienanordnung mit einer Oberfolie 12 und einer Unterfolie 14, die mit einer PUR-Schaumschicht 16 hinterschäumt ist.

Durch die senkrecht gezeichneten Pfeile ist eine auf das Armaturenbrett 10 einwirkende Wärmestrahlung 18 angedeutet, die auf der Oberfläche der Oberfolie 12 eine Temperatur $T_O$ und an der Grenzschicht zwischen der PUR-Schaumschicht 16 und der Unterfolie 14 eine Grenztemperatur $T_G$ hervorruft.

Ein soweit beschriebenes Armaturenbrett 10 ist - wenn man die in Fig. 1 weiterhin noch schematisch angedeuteten Pigmente (z.B. Aluminiumpulver) 20 und 22 nicht berücksichtigt - an sich bekannt.

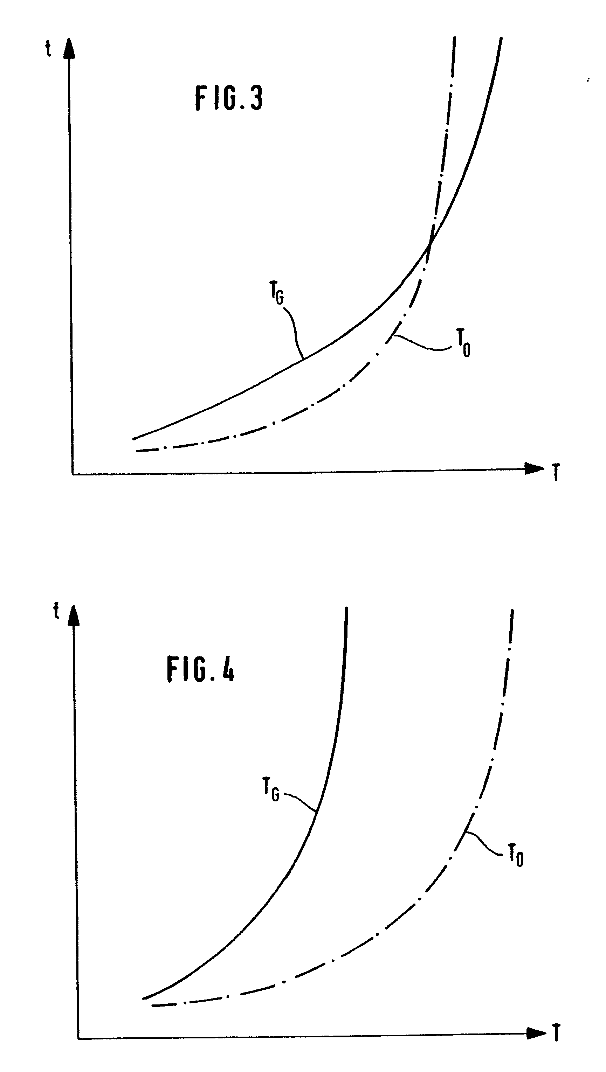

Zum besseren Verständnis der Erfindung wird nachfolgend auf Fig. 3 Bezug genommen, welche in prinzipieller Darstellung den Verlauf der Oberflächentemperatur $T_O$ und der Grenztemperatur $T_G$ bei einem bekannten Armaturenbrett zeigt, bei welchem also das lichtreflektierende Pulver 20, 22 nach Fig. 1 nicht vorhanden ist. Dabei ist die Temperatur T über der Zeit t aufgetragen.

Fig. 3 verdeutlicht nun, daß unter Einwirkung der Wärmestrahlung 18 die Grenztemperatur $T_G$ - also die Temperatur an der oberen Fläche der PUR-Schaumschicht 16 - erwartungsgemäß zunächst geringer als die Oberflächentemperatur $T_O$ ist, daß die Grenztemperatur $T_G$ jedoch nach längerer Einstrahlungsdauer nach einer gewissen Zeit t nicht nur ansteigt, sondern sogar noch größer als die Oberflächentemperatur $T_O$ selbst wird. Dies führt zu den eingangs beschriebenen Nachteilen und der Zerstörung der Folienanordnung 12, 14 durch Bildung von Rissen.

Bei der Erfindung sind nun gemäß Fig. 1 der Oberfolie 12 und auch der Unterfolie 14 Pigmente bzw. Aluminiumpulver 20 und 22 zugegeben, und dieses Aluminiumpulver bewirkt eine Reflektion mit der Folge, daß sich eine Reduzierung der Erwärmung der beiden Folien 12, 14 ergibt. Dabei enthält prozentual gesehen die Unterfolie 14 mehr lichtreflektierendes Pulver als die Oberfolie 12 .

Bei einer solchen neuartigen Folienanordnung 12, 14 ergibt sich für die Oberflächentemperatur $T_O$ bzw. für die Grenztemperatur $T_G$ ein Verlauf, wie er schematisch in Fig. 4 dargestellt ist. Wie dieser Zeichnung zu entnehmen ist, bleibt auch nach einer längeren Zeitdauer einer Wärmestrahlung 18 die Grenztemperatur $T_G$ immer kleiner als die Oberflächentemperatur $T_O$, was beim Stand der Technik gemäß Fig. 3 nicht der Fall ist.

Somit wird deutlich, daß durch die Verwendung des Aluminiumpulvers 20, 22 eine Reduzierung der Grenztemperatur $T_G$ erreicht wird, wobei sich in Messungen gezeigt hat, daß eine Temperaturreduzierung von etwa 30° C möglich ist.

Diese mit der Erfindung erreichte niedrigere Grenztemperatur $T_G$ besitzt solche Werte, daß eine Zersetzung der PUR-Schaumschicht 16 reduziert bzw. verzögert werden kann. Damit ist aber auch gewährleistet, daß kaum Zersetzungsprodukte in die Folienanordnung 12, 14 gelangen und daß die Folienanordnung 12, 14 somit auch bei starker Wärmestrahlung 18 weniger beschädigt wird.

Fig. 2 zeigt als weiteres Ausführungsbeispiel der Erfindung eine andere Folienanordnung, wobei hier der Einfachheit halber die untere PUR-Schaumschicht weggelassen ist.

Diese Folienanordnung besteht aus einer Oberfolie 12 und einer zweischichtigen Unterfolie 14, die durch die einzelnen Folienschichten 14a und 14b gebildet ist. Dabei können die Schichten 14a und 14b auch zu einer Schicht zusammengefaßt werden. Um die Erwärmung infolge von Strahlungswärme in gewünschtem Maße zu reduzieren, enthalten die einzelnen Folienschichten wiederum Aluminiumpulver 20 bzw. 22, wobei die unterschiedlichsten Teilchengrößen zur Anwendung kommen können.

Um zu verhindern, daß durch das lichtreflektierende Material der Farbton der Deckschicht bzw. Oberfolie 12 verändert wird, ist die Oberfolie 12 hier mit einem Ganzflächendruck in Form einer Deckschicht 24 versehen, die als Lackschicht oder auch als Folie selbst ausgebildet sein kann. Die Deckschicht 24 ist dabei frei von lichtreflektierendem Pulver. Einem bevorzugten Ausführungsbeispiel liegen folgende Dickenverhältnisse zugrunde:

Aluminiumfreie Lackschicht oder Folie : Dicke 0,002 - 0,2 mm

Aluminiumhaltige Folie 12 : Dicke 0,05 - 0,4 mm

Aluminiumhaltige Folie 14a : Dicke 0,2 - 1,0 mm

Aluminiumhaltige Folie 14b : Dicke 0,2 - 1,0 mm.

Im Hinblick auf den Gehalt an Aluminium (A1) gelten in diesem Fall des gezeigten Ausführungsbeispiels die folgenden Werte:

Lackschicht oder Folie 24 : Al-frei

Al-haltige Folie 12 : Al-Gehalt < 10 %

Al-haltige Folie 14a : Al-Gehalt ≧ 2 %

Al-haltige Folie 14b : Al-Gehalt ≧ 2 %

In den beschriebenen Ausführungsformen der Erfindung wurde als lichtreflektierendes Material als ein Ausführungsbeispiel Aluminiumpulver vorausgesetzt. Die Erfindung ist hierauf jedoch nicht beschränkt, denn an Stelle von Aluminiumpulver lassen sich auch andere lichtreflektierende Metalle verwenden, wie z.B. Titandioxyd, Metallflitter und andere lichtreflektierende Metalle als Pigmente.

## Ansprüche

1. Tiefziehbare mehrschichtige Folienanordnung, bestehend aus mindestens einer Ober- und Unterfolie, die zur Bildung von Formkörpern wie Armaturenbretter für Kraftfahrzeuge oder dergleichen mit einer Schaumschicht, vorzugsweise PUR-Schaum, hinterschäumt wird, dadurch gekennzeichnet, daß zumindest eine Folienschicht (12, 14) pulverförmige Pigmente aus einem lichtreflektierenden Material enthält, die bei der Herstellung der Folie zugegeben sind und ohne wesentlichen Einfluß auf die Farbe der Oberfolie (12) sind.

2. Folienanordnung nach Anspruch 1, dadurch gekennzeichnet, daß die Oberfolie (12) Aluminiumpulver (20) enthält, welches der Oberfolie (12) bei der Folienherstellung zugegeben wird.

3. Folienanordnung nach Anspruch 1 und/oder 2, dadurch gekennzeichnet, daß auch die Unterfolie (14) pulverförmige Pigmente (22) eines lichtreflektierenden Materials enthält.

4. Folienanordnung nach Anspruch 3, dadurch gekennzeichnet, daß die Oberfolie (12) weniger pulverförmige Pigmente (20) des lichtreflektierenden Materials enthält als die Unterfolie (14).

5. Folienanordnung nach einem oder mehreren der vorhergehenden Ansprüche 1 - 4, dadurch gekennzeichnet, daß die Folienanordnung (12, 14) eine obere Deckschicht (24) besitzt.

6. Folienanordnung nach Anspruch 5, dadurch gekennzeichnet, daß die Deckschicht (24) als Lackschicht oder als Folie ausgebildet ist.

7. Folienanordnung nach einem oder mehreren der vorhergehenden Ansprüche 1 - 6, dadurch gekennzeichnet, daß die Teilchengröße des lichtreflektierenden Materials (20, 22) zwischen 3 und 100 μm liegt.

FIG.1

FIG.2

FIG.3

FIG.4